**Europäisches Patentamt**

**European Patent Office**

**Office européen des brevets**

(19)

(11) Veröffentlichungsnummer : **0 032 393
B1**

(12) **EUROPÄISCHE PATENTSCHRIFT**

(45) Veröffentlichungstag der Patentschrift :
15.05.85

(21) Anmeldenummer : **81100150.2**

(22) Anmeldetag : **10.01.81**

(51) Int. Cl.⁴ : **G 05 D   1/02**

(54) Automatische Führungsvorrichtung für ein Flurförderzeug.

(30) Priorität : **15.01.80 DE 3001146**

(43) Veröffentlichungstag der Anmeldung :
**22.07.81 Patentblatt 81/29**

(45) Bekanntmachung des Hinweises auf die Patenterteilung : **15.05.85 Patentblatt 85/20**

(84) Benannte Vertragsstaaten :
**AT BE CH DE FR GB IT LI NL SE**

(56) Entgegenhaltungen :
**DE-A- 2 041 095
DE-A- 2 241 682
DE-A- 2 518 120
US-A- 3 708 668
US-A- 3 740 141**

(73) Patentinhaber : **Köttgen GmbH & Co Kommanditgesellschaft
Jakobstrasse 93-101
D-5060 Bergisch Gladbach 2 (DE)**

(72) Erfinder : **Gronau, Jürgen
Sander Strasse 112
D-5060 Bergisch Gladbach 2 (DE)**

(74) Vertreter : **Selting, Günther, Dipl.-Ing. et al
Deichmannhaus am Hauptbahnhof
D-5000 Köln 1 (DE)**

## Beschreibung

Die Erfindung betrifft eine automatische Führungsvorrichtung für ein Flurförderzeug, mit einer auf ortsfeste Leiteinrichtungen reagierenden und eine Lenkvorrichtung steuernden berührungslos arbeitenden Abstandsmeßeinrichtung mit seitlich vom Flurförderzeug weisender Meßrichtung und einer Blockiereinrichtung, die die Lenkvorrichtung in der zuletzt eingestellten Position festhält, wenn die gemessenen Abstandswerte außerhalb eines definierten Meßbereichs liegen.

Es ist bekannt, zum Beschicken und Entleeren von Regallagern in den zwischen den Regalen verlaufenden Regalgängen Flurförderzeuge dadurch zu führen, daß zu beiden Seiten des Regalganges Stahlschienen angeordnet sind, an denen Seitenführungsrollen des Flurförderzeugs abrollen. Das Flurförderzeug, dessen Lenkung blockiert ist, wird durch die Stahlschienen auf seinem Weg gehalten und kann nicht direkt mit einem Regal kollidieren. Der Fahrer braucht also das Flurförderzeug zwischen den Regalen nicht zu lenken, sondern das Flurförderzeug wird selbsttätig entlang des eingeschlagenen Kurses zwangsgeführt. Ein derartiges Führungssystem verlangt stabile und aufwendige Stahlschienen zu beiden Seiten der Fahrstrecke. Die Leitschienen sind nicht nur aufwendig und teuer, sondern sie stellen, da sie oberhalb des Bodens angeordnet sein müssen, auch eine erhebliche Behinderung dar.

Weiterhin sind Leitlinienführungen bekannt, bei denen ein im Boden verlegter Draht mit Hochfrequenzstrom gespeist wird. Die Flurförderzeuge sind mit Antennen ausgerüstet, die das um den Draht entstehende Magnetfeld abtasten und über eine Regeleinrichtung und einen Lenkmotor auf die Lenkung einwirken. Zur Durchführung der Leitaufgabe ist ein relativ hoher Aufwand hinsichtlich des Frequenzgenerators, der Leitungsverlegung und an Bodenarbeiten erforderlich.

Aus US-A-3 708 668 ist ferner ein Fahrzeugleitsystem bekannt, das mit photoelektrischen Elementen ausgestattet ist, die auf einen quer zur Fahrtrichtung verlaufenden Streifen gerichtet sind und den unterbrochenen Mittelstreifen der Fahrbahn erkennen. An den Unterbrechungen des Mittelstreifens wird kein Signal geliefert. Am Ende eines Streifenabschnitts wird die zu diesem Zeitpunkt jeweils ermittelte Lenkposition in einem Alt-Positionsregister gespeichert und wenn der nächstfolgende Streifenabschnitt erkannt wird, wird das Alt-Positionsregister neu geladen. Die Führungsvorrichtung arbeitet unabhängig von der jeweiligen Fahrzeuggeschwindigkeit.

Der Erfindung liegt die Aufgabe zugrunde, eine automatische Führungsvorrichtung der eingangs gennanten Art zu schaffen, bei der im Falle einer zu großen Unterbrechung der Leiteinrichtungen die Abschaltung des Fahrantriebs in Abhängigkeit von der Fahrzeuggeschwindigkeit erfolgt und die Blockierung der Lenkung anschließend selbsttätig wieder aufgehoben wird.

Zur Lösung dieser Aufgabe ist erfindungsgemäß vorgesehen, daß die Blockiereinrichtung von einem Zähler gesteuert ist, der von einem das Verlassen des Meßbereichs feststellenden Detektor in Betrieb gehalten wird und Impulse einer mit dem Fahrwerk gekoppelten Impulsquelle zählt und nach Erreichen einer vorgegebenen Impulszahl den Fahrantrieb und die Blockiereinrichtung außer Funktion setzt.

Die Impulsquelle sendet Impulse aus, die geschwindigkeitsabhängig oder von dem durchfahrenen Weg abhängig sind. Auf diese Weise wird sichergestellt, daß bei größeren Fahrgeschwindigkeiten die mit blockierter Lenkvorrichtung zurückgelegte Strecke nicht wesentlich größer ist als bei niedrigen Fahrgeschwindigkeiten.

Zur Verhinderung von Kollisionen mit anderen Hindernissen können selbstverständlich die üblichen Fühler und Meßeinrichtungen vorhanden sein, die den Fahrantrieb abschalten, sobald das Fahrzeug einem Hindernis unzulässig nahe kommt.

Für die Fahrt in engen Regalgängen können zwei Wegdetektoren vorgesehen sein, die nach entgegengesetzten Seiten des Flurförderzeugs ausgerichtet sind. Die Wegdetektoren können so aufeinander abgestimmt bzw. an die Regeleinrichtung angeschlossen sein, daß die Abstände des Flurförderzeuges von den beidseitigen Flächen gleich sind, so daß das Flurförderzeug exakt in der Gangmitte gehalten wird. Erforderlichenfalls können aber auch die Abstände von beiden Flächen unterschiedlich gewählt werden.

Im folgenden wird unter Bezugnahme auf die Figuren ein Ausführungsbeispiel der Erfindung näher erläutert.

Es zeigen:

Figur 1 eine schematische Darstellung eines Flurförderzeugs, daß an einem Regal entlangfährt,

Figur 2 eine Seitenansicht des Flurförderzeugs nach Anspruch 1 und

Figur 3 ein schematisches Blockschaltbild einer Regeleinrichtung, die dazu geeignet ist, Lücken in der abgetasteten Fläche zu überbrücken.

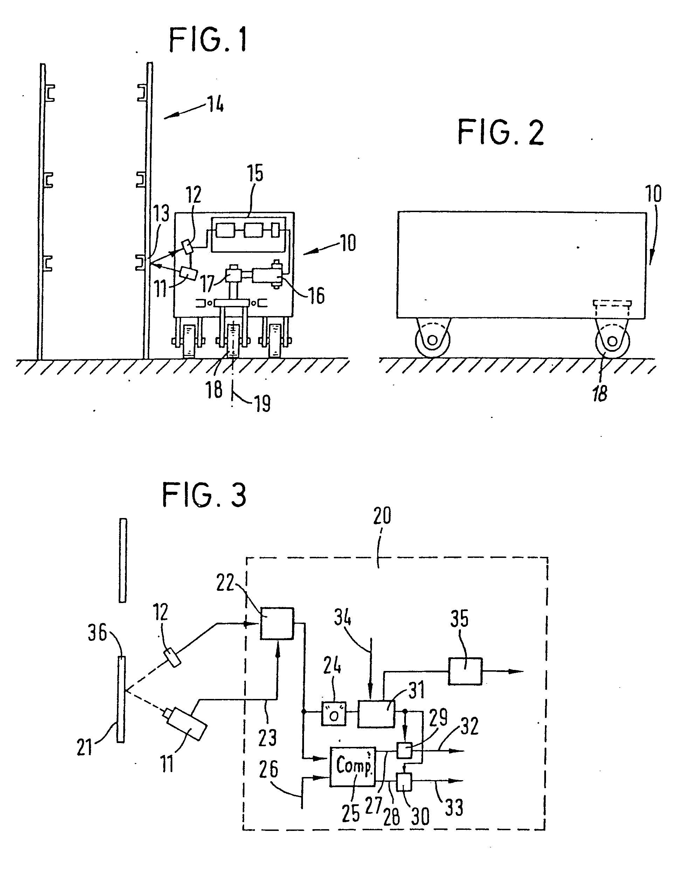

In den Figuren 1 und 2 ist das mit 10 bezeichnete und lediglich schematisch dargestellte Flurförderzeug mit einer Abstandsmeßeinrichtung ausgestattet, die einen Schallsender 11 und einen Schallempfänger 12 aufweist. Der Schallsender 11 strahlt seitlich von dem Flurförderzeug 10 Ultraschallimpulse ab, die von der Traverse 13 des Lagerregals 14 reflektiert werden und um die Laufzeit des Schallweges verzögert zum Schallempfänger 12 gelangen. Durch Messung der Laufzeit zwischen Aussenden und Empfang des Ultraschallimpulses wird die Entfernung der Abstandsmeßeinrichtung 11, 12 von dem Regal 14 ermittelt. Die von der Abstandsmeßeinrichtung 11, 12 ermittelte Laufzeit wird an eine Auswerteschaltung 15 weitergeleitet, die Abweichungen von einem Sollwert feststellt und in Abhängigkeit von diesen Abweichungen den Lenkantrieb 16 betätigt. Der Lenkantrieb 16 ist ein Elektromotor, der über ein Schneckengetriebe 17 auf das lenkbare Rad 18 des dreirädrigen Flurförderzeuges 10 einwirkt und das Rad 18 um die vertikale Lenkachse 19 herum verschwenkt, so daß das Rad 18 Lenkbewegungen ausführt. Auf diese Weise wird das Flurförderzeug 10 in konstantem Abstand von der Regaltraverse 2 gehalten.

Bei dem Ausführungsbeispiel der Figuren 1 und 2 bildet die Regaltraverse 13 die Bezugsfläche, an der die Wellen der Abstandsmeßeinrichtung reflektiert werden. Als Bezugsfläche kann auch beispielsweise eine gemauerte oder betonierte Wand benutzt werden.

Wenn keine kontinuierliche Regaltraverse 13 vorhanden ist, oder wenn die als Bezugsfläche dienende Wand Unterbrechungen aufweist, wird die in Figur 3 dargestellte Auswerteeinrichtung 20 benutzt. Diese ist ebenfalls an eine Abstandsmeßeinrichtung 11, 12 angeschlossen, die in der oben beschriebenen Weise arbeitet, indem der Sender 11 Impulse aussendet, die von der Bezugsfläche 21 reflektiert und mit einer Laufzeitverzögerung dem Empfänger 12 zugeführt werden. Beim Aussenden eines Sendeimpulses wird einem Meßwerk 22 über Leitung 23 ein Impuls zugeführt. Das Meßwerk 22 empfängt ferner den Ausgangsimpuls des Empfängers 12 und ermittelt die Zeitdifferenz zwischen dem Sendeimpuls und dem Empfangsimpuls. Das Meßwerk 22 ist ferner so ausgebildet, daß es nur solche Laufzeiten auswertet, die innerhalb eines vorgegebenen Zeitfensters liegen. Das Zeitfenster bestimmt den Abstandsbereich, in dem auswertbare Messungen durchgeführt werden. Wenn sich Laufzeiten ergeben, die außerhalb des Zeitfensters liegen, wird am Ausgang des Meßwerkes 22 ein « 0 »-Signal erzeugt. Wenn die gemessene Laufzeit sich dagegen im Bereich des Zeitfensters befindet, wird am Ausgang des Meßwerks 22 ein Signal erzeugt, das die gemessene Laufzeit repräsentiert.

Das Ausgangssignal des Meßwerks 22 wird einem Detektor 24 und einem Komparator 25 zugeführt. Der Detektor 24 stellt fest, ob das ihm zugeführte Signal « 0 » ist oder einen auswertbaren Meßwert repräsentiert. Dem Komparator 25 wird über eine zweite Eingangsleitung 26 eine Bezugsspannung zugeführt, die dem Soll-Abstand der Sende und Empfangseinrichtung 11, 12 von der Bezugsfläche 21 entspricht. Der Komparator 25 weist ferner zwei Ausgangsleitungen 27 und 28 auf. An der Ausgangsleitung 27 wird ein Steuersignal erzeugt, wenn das Ausgangssignal des Meßwerkes 22 größer ist als die Bezugsspannung an Leitung 26, und an Ausgangsleitung 28 wird ein Signal erzeugt, wenn das Ausgangssignal des Meßwerkes 22 kleiner ist als das Bezugssignal an Leitung 26. Die Ausgangsleitung 27 ist an eine Halteschaltung 29 und die Ausgangsleitung 28 an eine Halteschaltung 30 angeschlossen. Das Ausgangssignal des Detektors 24 steuert über einen als Verzögerungsglied wirkenden Zähler 31 die Halteschaltungen 29 und 30 in der Weise, daß bei Auftreten eines « 0 »-Signales am Ausgang des Meßwerks 22 die Signale der Ausgangsleitungen 27 und 28 von den Halteschaltungen 29 und 30 festgehalten werden. Wenn somit die Bezugsfläche 21 unterbrochen ist und am Ausgang des Detektors 24 ein Signal erscheint, das angibt, daß ein auswertbarer Abstand nicht ermittelt wurde, wird der zuletzt ermittelte Abstand bzw. die Differenz dieses Abstandes von dem eingestellten Sollwert von einer der Halteschaltungen 29, 30 festgehalten und weiterhin an die betreffende Lenk-Steuerleitung 32, 33 gelegt. Der Zähler 31 schaltet nach einer gewissen Zeit die Übertragung des Ausgangssignals des Detektors 24 zu den Halteschaltungen 29 und 30 ab. Diese Zeit wird durch einen Impulstakt an Leitung 34 derart bestimmt, daß der Zähler 31 das Ausgangssignal des Detektors 24 über eine bestimmte Anzahl von Impulsen übertragen kann, danach aber auf Null abfällt. Leitung 34 ist an eine Impulsquelle angeschlossen, die mit dem Fahrwerk des Flurförderzeuges 10 gekoppelt ist. Die Impulsquelle besteht beispielsweise aus einer Schlitzscheibe, die synchron mit den Rädern des Flurförderzeuges rotiert un deren Schlitze einen Impulsgeber erregen. Bei schneller Fahrt des Flurförderzeuges 10 ist die Folgefrequenz der Intaktimpulse an Leitung 34 relativ hoch und bei langsamer Fahrt ist die Folgefrequenz der Impulse an Leitung 34 relativ niedrig. Die Zeitspanne, in der der Zähler 31 das Ausgangssignal des Detektors 24 zu den Halteschaltungen 29 und 30 überträgt, ist also umgekehrt proportional der Fahrgeschwindigkeit.

Um sicherzustellen, daß der Antrieb des Flurförderzeugs 10 abgeschaltet wird, nachdem der Zähler 31 abgelaufen ist, ist der Zähler 31 mit einer Abschalteinrichtung 35 verbunden. Wenn der Zähler 31 seine volle Impulszahl bzw. Ablaufzeit erreicht hat bzw. wenn der Detektor 24 über die vorgegebene Anzahl von Impulsen an Leitung 34 hinweg ein « 1 »-Signal erzeugt hat, spricht die Abschalteinrichtung 35 an und bewirkt die Abschaltung des Fahrantriebes des Flurförderzeuges sowie eine sofortige Bremsung. Das Flurförderzeug bleibt dann stehen.

Wenn die Bezugsfläche 21 dagegen eine Unterbrechung 36 aufweist, deren Länge unterhalb des vorgegebenen Maximalwertes liegt, dann wird durch die Funktion der Halteschaltungen 29 und 30 das betreffende Wegstück überbrückt. Das Flurförderzeug hält die zuletzt eingestellte Lenkbewegung bei, bis am Ausgang des Meßwerkes 22 wieder auswertbare Meßwerte auftreten.

Auf diese Weise ist es möglich, bei Regalen ohne durchgehende Leitschiene als Bezugsflächen lediglich die Regalpfosten oder Ständer auszuwerten, die in bestimmten Abständen angeordnet sind. Anstelle einer Meßeinrichtung, die mit Schall oder Ultraschall arbeitet, kann auch eine Radarmeßeinrichtung oder eine Laser-Meßeinrichtung benutzt werden.

## Patentansprüche

1. Automatische Führungsvorrichtung für ein Flurförderzeug, mit einer auf ortsfeste Leiteinrichtungen (13, 21) reagierenden und eine Lenkvorrichtung steuernden berührungslos arbeitenden Abstandsmeßeinrichtung (11, 12) mit seitlich vom Flurförderzeug weisender Meßrichtung und einer Blockiereinrichtung (29, 30), die die Lenkvorrichtung in der zuletzt eingestellten Position festhält, wenn die gemessenen Abstandswerte außerhalb eines definierten Meßbereichs liegen, dadurch gekennzeichnet, daß die Blockiereinrichtung (29, 30) von einem Zähler (31) gesteuert ist, der von einem das Verlassen des Meßbereichs feststellenden Detektor (24) in Betrieb gehalten wird und Impulse einer mit dem Fahrwerk gekoppelten Impulsquelle (Leitung 34) zählt und nach Erreichen einer vorgegebenen Impulszahl den Fahrantrieb und die Blockiereinrichtung (29, 30) außer Funktion setzt.

2. Führungsvorrichtung nach Anspruch 1, dadurch gekennzeichnet, daß die Impulsquelle mit dem Fahrwerk des Flurförderzeuges derart gekoppelt ist, daß die Folgefrequenz der erzeugten Impulse wegabhängig ist.

3. Führungsvorrichtung nach Anspruch 1, dadurch gekennzeichnet, daß die Impulsquelle mit dem Fahrwerk des Flurförderzeuges derart gekoppelt ist, daß die Folgefrequenz der erzeugten Impulse geschwindigkeitsabhängig ist.

## Claims

1. Automatic guiding means for guiding a ground travelling vehicle, comprising a contactlessly working distance measuring device (11, 12) being responsive to stationary pilot means and controlling a steering unit, the distance measuring device having a measuring direction oriented laterally of the travelling vehicle and a locking means (29, 30) which, if the measured distance values are outside a defined measurement range, maintains the steering unit in the position set at last, characterized in that the locking means (29, 30) is monitored by a counter (31) which is enabled by a detector (24) for detecting if the measuring range is left, and which, by counting the pulses of a pulse source (line 32) coupled to the driving unit causes the driving unit and the locking means (29, 30) to be put out of operation if a predetermined pulse number is reached.

2. Guiding means according to claim 1, characterized in that the pulse source is so coupled to the driving unit of the travelling vehicle that the repetition frequency of the generated pulses is distance-dependent.

3. Guiding means according to claim 1, characterized in that the pulse source is so coupled to the moving gear of the travelling vehicle that the repetition frequency of the generated pulses is speed-dependent.

## Revendications

1. Dispositif de guidage automatique pour un chariot de manutention pourvu d'un dispositif de mesure de distance (11, 12) fonctionnant sans contact, qui réagit sur des dispositifs de conduite fixes (13, 21) et qui commande un dispositif de direction, ledit dispositif de mesure de distance présentant une direction de mesure orientée latéralement à partir du chariot de manutention et un mécanisme de blocage (29, 30) qui retient le dispositif de direction dans la position établie en dernier lorsque les valeurs de distance mesurées se situent à l'extérieur d'un domaine de mesure défini, caractérisé par le fait que le mécanisme de blocage (29, 30) est commandé par un compteur (31) qui est maintenu en service par un détecteur (24) déterminant l'abandon du domaine de mesure et qui compte les impulsions d'une source d'impulsions (ligne 34) couplée à la commande de propulsion et qui met hors de fonctionnement la commande de propulsion et le mécanisme de blocage (29, 30) au-delà de la production d'un nombre d'impulsions prédéterminé.

2. Dispositif de guidage selon la revendication 1, caractérisé par le fait que la source d'impulsions est couplée avec la commande de propulsion du chariot de manutention de façon que la fréquence de succession des impulsions produites soit dépendante du parcours.

3. Dispositif de guidage selon la revendication 1, caractérisé par le fait que la source d'impulsions est couplée avec la commande de propulsion du chariot de manutention de façon que la fréquence de succession des impulsions produites soit dépendante de la vitesse.

FIG. 1

FIG. 2

FIG. 3